# EUROPÄISCHE PATENTANMELDUNG

(11) **EP 0 833 539 A2**
(43) Veröffentlichungstag der Anmeldung: **01.04.1998**
(21) Anmeldenummer: 97115754.0
(22) Anmeldetag: 10.09.1997
(51) Int. Cl.: H04Q 7/34, H04Q 7/38

(54) **Verfahren zum Wiederherstellen von tielnehmerbezogenen Informationen in einem Datenbanksystem eines Kommunikationsnetzes**

(30) Priorität: 30.09.1996 DE 19640411
(71) Anmelder: SIEMENS AKTIENGESELLSCHAFT, 80333 München (DE)
(72) Erfinder: Karapetkov, Stefan, 81369 München (DE); Scotto di Carlo, Vincenzo, 81739 München (DE); Müller, Wilhelm, 85457 Wörth (DE)

(57) **Zusammenfassung**

Zum Wiederherstellen von teilnehmerbezogenen Informationen in einem ersten Datenbanksystem eines ersten Kommunikationsnetzes für den Fall, daß die entsprechenden Teilnehmer sowohl in dem ersten Kommunikationsnetz als auch in einem zweiten Kommunikationsnetz als Teilnehmer angemeldet sind und in dem zweiten Kommunikationsnetz ein zweites Datenbanksystem zum Speichern von Teilnehmerdatensätzen mit teilnehmerbezogenen Informationen vorgesehen ist, ist im zweiten Kommunikationsnetz eine Steuereinrichtung zum Abfragen der für das erste Datenbanksystem relevanten teilnehmerbezogenen Informationen aus den Teilnehmerdatensätzen des zweiten Datenbanksystems vorgesehen. Eine Steuerung des ersten Datenbanksystems ermittelt potentiell fehlerhafte teilnehmerbezogenen Informationen im ersten Datenbanksystem und übermittelt eine Anforderungsmeldung zum Anfordern der entsprechenden korrekten Informationen an die Steuereinrichtung des zweiten Kommunikationsnetzes. Die Steuereinrichtung fragt daraufhin die entsprechenden Informationen aus dem zweiten Datenbanksystem ab und übermittelt sie an die Steuerung des ersten Datenbanksystems.

## Beschreibung

Die Erfindung betrifft ein Verfahren zum Wiederherstellen von teilnehmerbezogenen Informationen in einem ersten Datenbanksystem eines ersten Kommunikationsnetzes, wenn die entsprechenden Teilnehmer sowohl in dem ersten Kommunikationsnetz als auch in einem zweiten Kommunikationsnetz als Teilnehmer angemeldet sind, wobei in dem zweiten Kommunikationsnetz ein zweites Datenbanksystem zum Speichern von Teilnehmerdatensätzen mit teilnehmerbezogenen Informationen vorgesehen ist und vom aktuellen Aufenthaltsort des Teilnehmers bzw. Endgerätes abhängige Informationen wiederherzustellen sein könnten. Solche teilnehmer- bzw. endgerätebezogenen Informationen können beispielsweise Informationen über die aktuelle Erreichbarkeit eines Teilnehmers bzw. Endgeräts sein oder aktuelle endgerätespezifische Leistungsmerkmaleinstellungen.

Aus dem Buch von M. Mouly, M.B. Pautet, "The GSM System for Mobile Communications", 1992, F-91120 Paliseau ist insbesondere auf den Seiten 470 bis 473 das Aktualisieren der Datenbasis des Aufenthaltsortes von Endgeräten in einem Mobilfunknetz sowie das Wiederherstellen von teilnehmerbezogenen bzw. endgerätebezogenen Informationen innerhalb einer Datenbasis nach einem Störfall beschrieben. Hierbei werden nur Informationen über die Erreichbarkeit eines Teilnehmers bzw. Endgerätes innerhalb des Mobilfunknetzes gespeichert bzw. wiederhergestellt. Bei dem hier beschriebenen Verfahren zum Wiederherstellen von Informationen über den Aufenthaltsort eines Endgerätes innerhalb des Mobilfunknetzes werden in einem ersten Schritt die unsicheren, also potentiell falschen Informationen als solche markiert. Dann werden andere Einheiten des Mobilfunknetzes von dem unsicheren Zustand dieser Informationen unterrichtet, woraufhin auch diese Einheiten die entsprechenden Informationen als unsicher markieren. Um die Signalisierungsbelastung des Kommunikationsnetzes möglichst wenig zu belasten, werden die unsicheren Daten nur dann wiederhergestellt bzw. korrigiert, wenn ein den Teilnehmer bzw. das Endgerät betreffendes Ereignis auftritt, wie z.B. ein von dem Endgerät initialisierter Funkkontakt. Um einen solchen Funkkontakt innerhalb einer bestimmten Zeitspanne sicherzustellen, wird die Information über den Aufenthaltsort des Teilnehmers bzw. des Endgerätes periodisch, beispielsweise einmal täglich, aktualisiert. Das bekannte Verfahren, das nur innerhalb eines Mobilfunknetzes angewandt wird, setzt voraus, daß eine Einheit, die beispielsweise eine Information über den aktuellen Aufenthaltsort eines Endgerätes bereitstellen kann, eine Mitteilung darüber erhält, daß die entsprechenden Daten aufgrund eines Fehlerfalles evtl. nicht korrekt sind. Wenn eine solche Mitteilung vorliegt, werden diese Daten aktualisiert, d.h. korrigiert, falls eine bestimmte Aktion bezüglich des Endgerätes auftritt. Um eine solche Aktion innerhalb einer bestimmten Zeitdauer sicherzustellen, ist es bekannt, einen periodischen Funkkontakt zu veranlassen.

Aufgabe der vorliegenden Erfindung ist es, ein Verfahren zum Wiederherstellen von teilnehmerbezogenen bzw. endgerätebezogenen Informationen nach einem Fehler in einem Datenbanksystem eines ersten Kommunikationsnetzes zum Speichern solcher Informationen für den Fall bereitzustellen, daß ein Teilnehmer bzw. Endgerät sowohl über das erste Kommunikationsnetz als auch über ein weiteres Kommunikationsnetz erreichbar ist, wobei vom aktuellen Aufenthaltsort des Teilnehmers bzw. Endgerätes abhängige Informationen wiederherzustellen sein könnten.

Diese Aufgabe löst die Erfindung durch ein Verfahren mit den Merkmalen des Anspruches 1. Günstige Ausgestaltungsformen eines solchen Verfahrens sind Gegenstand von Unteransprüchen.

Zum Wiederherstellen von teilnehmerbezogenen Informationen in einem ersten Datenbanksystem eines ersten Kommunikationsnetzes für den Fall, daß die entsprechenden Teilnehmer sowohl in dem ersten Kommunikationsnetz als auch in einem zweiten Kommunikationsnetz als Teilnehmer angemeldet sind, wobei in dem zweiten Kommunikationsnetz ein zweites Datenbanksystem zum Speichern von Teilnehmerdatensätzen mit teilnehmerbezogenen Informationen vorgesehen ist, ist im zweiten Kommunikationsnetz eine Steuereinrichtung zum Abfragen der für das erste Datenbanksystem relevanten teilnehmerbezogenen Informationen aus den Teilnehmerdatensätzen des zweiten Datenbanksystems vorgesehen. Eine Steuerung des ersten Datenbanksystems ermittelt potentiell fehlerhafte teilnehmerbezogenen Informationen im ersten Datenbanksystem und übermittelt eine Anforderungsmeldung zum Anfordern der entsprechenden korrekten Informationen an die Steuereinrichtung des zweiten Kommunikationsnetzes. Die Steuereinrichtung fragt daraufhin die entsprechenden Informationen aus dem zweiten Datenbanksystem ab und übermittelt sie an die Steuerung des ersten Datenbanksystems.

Eine Ausgestaltung eines solchen Verfahrens sieht vor, daß die Steuerung des ersten Datenbanksystems nur die Informationen bezüglich eines einziges Teilnehmers anfordert.

Eine andere Ausgestaltung eines solchen Verfahrens sieht vor, daß die Steuerung des ersten Datenbanksystems die Informationen bezüglich mehrerer Teilnehmer anfordert.

Eine weitere Ausgestaltung eines solchen Verfahrens sieht vor, daß die Steuerung des ersten Datenbanksystems die Informationen bezüglich aller in beiden Netzen gemeldeten Teilnehmer anfordert.

Das erste Kommunikationsnetz kann beispielsweise ein Mobilfunknetz sein und das zweite Kommunikationsnetz ein Kommunikationsnetz mit mehreren Schnurloskommunikationsanlagen.

Das erste Kommunikationsnetz kann aber auch ein Mobilfunknetz auf der Grundlage einer ersten Technologie sein und das zweite Kommunikationsnetz ein Mobilfunknetz auf der Grundlage einer zweiten Technologie, oder das zweite Kommunikationsnetz kann ein Kommunikationsnetz mit leitungsgebunden angeschlossenen, jeweils einem Teilnehmer zugeordneten Endgeräten sein.

Ein erfindungsgemäßes Verfahren ist auch anwendbar, wenn das zweite Kommunikationsnetz mehrere Schnurloskommunikationsanlagen enthält und einzelnen Teilnehmern drahtlos verbindbare Endgerät zugeordnet sind, wobei jedes drahtlos verbindbare Endgerät, das in dem zweiten Kommunikationsnetz als Teilnehmerendgerät angemeldet und betreibbar ist in einer der Schnurloskommunikationsanlagen als Teilnehmerendgerät angemeldet und betreibbar ist und in den übrigen Schnurloskommunikationsanlagen als Gastendgerät betreibbar ist. In diesem Falle kann das zweite Datenbanksystem aus einer Vielzahl von Datenbanken einzelner Schnurloskommunikationsanlagen bestehen. In einer Weierbildung eines erfindungsgemäßen Verfahrens fragt dann eine einzige Steuereinrichtung auf eine Anforderung des ersten Datenbanksystems hin die angeforderten Informationen aus den einzelnen Datenbanken des zweiten Datenbanksystems ab und übermittelt sie an die Steuerung des ersten Datenbanksystems.

Die an die Steuerung des ersten Datenbanksystems übermittelten teilnehmerbezogenen Informationen sollten vorzugsweise mindestens Informationen über die aktuelle Erreichbarkeit des jeweiligen Teilnehmers einschließen.

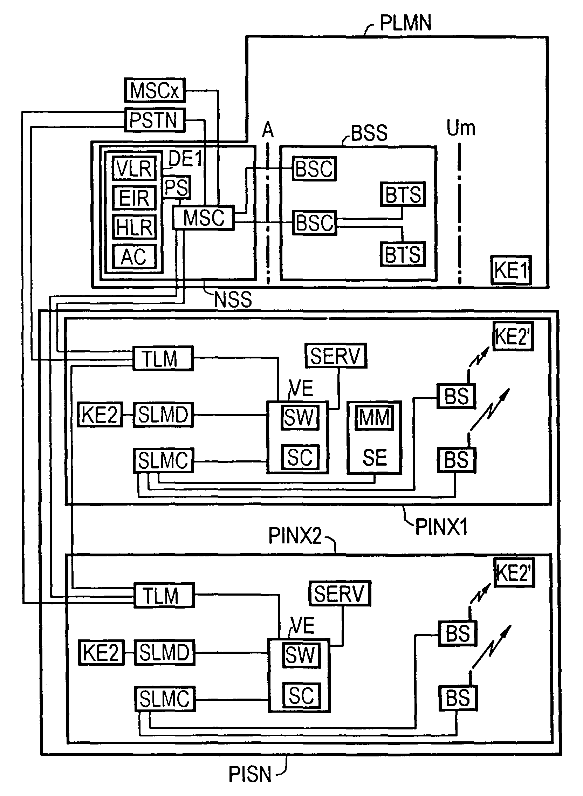

Nachstehend wird die Erfindung unter Bezugnahme auf die Figur anhand eines Ausführungsbeispieles näher erläutert.

Die Figur zeigt in schematischer Darstellung ein Blockschaltbild einer Netzanordnung, bestehend aus einem Mobilfunknetz, einem öffentlichen stationä- ren Netz und einem Privatnetz, bestehend aus zwei Schnurloskommunikationseinrichtungen.

Die Figur zeigt in schematischer Darstellung ein Blockschaltbild eines Mobilfunknetzes PLMN mit einem Netzsubsystem NSS (Network Subsystem) zum Verbindungsaufbau zwischen mindestens einem Mobilteilnehmer mit anderen Teilnehmern und zum Mobilitätsmanagement, und mit einem Basisstationensubssystems zum Steuern der Funkverbindungen mit Mobilstationen. In der Figur ist beispielhaft eine Mobilstation als Kommunikationsendgerät KE1 gezeigt.

Die Haupteinheit des Netzwerksubsystems NSS ist ein Mobildienstevermittlungszentrum MSC (Mobile Services Switching Center), das über eine A-Schnittstelle mit Basisstationssteuereinheiten BSC (Base Station Controller) kommuniziert. In dem einen in der Figur dargestellten Basisstationsstationssubsystem BSS ist eine Basisstationsteuereinheit BSC gezeigt, die mehrere Basisstationen BTS bedarfsweise mit dem Mobildienstevermittlungszentrum MSC verbindet.

Das Mobildienstevertnittlungszentrum MSC dient als üblicher Vermittlungsknoten und stellt darüber hinaus alle zum Behandeln von mobilen Teilnehmern benötigten Funktionalitäten wie Registrierung, Autentifikation, Aktualisierung des Aufenthaltsortes, Gesprächsübergabe zwischen Basisstationen und Rufsteuerung zu einem in einem Bereich einer Basisstation als anwesend angemeldeten Teilnehmer bereit. Das Mobildienstevermittlungszentrum MSC stellt auch Verbindungen zu den öffentlichen Netzen PSTN und im Beispiel nach der Figur zu einem anderen Mobildienstevermittlungszentrum MSCx sowie zu zwei Schnurloskommunikationseinrichtungen PINX1, PINX2 eines privaten Netzes bereit. Ein Heimataufenthaltsortsregister HLR und ein Besucheraufenthaltsortsregister VLR dienen gemeinsam mit dem Mobildienstevermittlungszentrum MSC der Rufsteuerung und der Aufenthaltsortermittlung von Teilnehmerendgeräten im Mobilfunknetz.

Zwei weitere Register des Netzsubsystems NSS, nämlich ein Equipment-Identity-Register EIR und ein Authentifizierungsregister AC werden zur Authentifikation und zu Sicherheitszwecken benutzt. Das Equipment Identity Register EIR enthält eine Liste aller in dem Netz zugelassener Mobilgeräte, wobei jede Mobilstation durch ihre internationale Mobile-Equipment-Identitfikation IMEI (International Mobile Equipment Identity) identifiziert ist. Im Authentifizierungszenter AC sind Kopien aller geheimen, jeweils in der SIM-Karte jedes Teilnehmers gespeicherten Schlüssel abgelegt, die zur Authentifikation und zur Verschlüsselung über den Funkkanal verwendet werden.

Demnach liegt von jedem Teilnehmer innerhalb des Mobilfunknetzes PLM eine ihm zugeordnete Datenbasis vor, in der seine Berechtigungen, sein Aufenthaltsort und weitere Informationen abrufbar gespeichert sind.

Das Mobildienstevermittlungszentrum MSC kommuniziert mit den Registern HLR, VLR, AC und EIR unter Verwendung eines MAP genannten Protokolls (Mobile Application Part Protocol). Dieses genormte Protokoll MAP enthält Signalisierungsfunktionen, die zum Bereitstellen von in einem Mobilnetz benötigten Diensten erforderlich sind.

Die Figur zeigt außerdem zwei Schnurloskommunikationseinrichtungen PINX1, PINX2 eines Privatnetzes, jeweils mit einer Vermittlungseinrichtung VE zum Auf- und Abbau von Verbindungen zwischen Teilnehmern. Die beiden Schnurloskommunikationseinrichtungen PINX1, PINX2 sind hierbei identisch dargestellt und werden nur einmal beschrieben. Die Vermittlungseinrichtung VE enthält einen Vermittlungsknoten SW und eine Vermittlungssteuerung SC. Die Vermittlungseinrichtung VE ist über ein Netzleitungsanschlußmodul PLM mit einem öffentlichen Kommunikationsnetz PSTN und mit dem Mobildienstevermittlungszentrum MSC des Mobilfunknetzes PLMN verbindbar. Die Vermittlungseinrichtung VE kann über Teilnehmeranschlußmodule SLMD und SLMC Verbindungen zu Kommunikationsendgeräten KE2, KE2' aufbauen. Das in der Figur beispielhaft dargestellte Teilnehmeranschlußmodul für digitale Endgerät SLMD ist über eine Leitung mit einem Kommunikationsendgerät KE2 verbindbar. Das in der Figur dargestellte Schnurlos-Teilnehmeranschlußmodul SLMC ist über eine Basisstation BS und eine Funkstrecke mit einem Kommunikationsendgerät KE2' verbindbar.

Die Figur zeigt außerdem eine Steuereinrichtung SE zum Speichern der für das erste Datenbanksystem DE1 relevanten teilnehmerbezogenen Informationen aus den Teilnehmerdatensätzen der Datenbanken der Schnurloskommunikationsanlagen PINX2, PINX1 in der Speichereinrichtung MM.

Zum Wiederherstellen von teilnehmerbezogenen Informationen in dem ersten Datenbanksystem DE1 des Mobilfunknetzes PLMN für den Fall, daß die entsprechenden Teilnehmer sowohl in dem Mobilfunknetzes PLMN als auch in dem Schnurloskommunikationsnetz PISN als Teilnehmer angemeldet sind, ist im Schnurloskommunikationsnetz PISN eine Steuereinrichtung SE zum Abfragen der für das erste Datenbanksystem DE1 relevanten teilnehmerbezogenen Informationen aus den Teilnehmerdatensätzen des zweiten Datenbanksystems vorgesehen. Eine Steuerung des ersten Datenbanksystems DE1 ermittelt potentiell fehlerhafte teilnehmerbezogenen Informationen im ersten Datenbanksystem DE1 und übermittelt eine Anforderungsmeldung zum Anfordern der entsprechenden korrekten Informationen an die Steuereinrichtung SE des Schnurloskommunikationsnetz PISN. Die Steuereinrichtung SE fragt daraufhin die entsprechenden Informationen aus dem zweiten Datenbanksystem ab und übermittelt sie an die Steuerung des ersten Datenbanksystems DE1.

## Patentansprüche

1. Verfahren zum Wiederherstellen von teilnehmerbezogenen Informationen in einem ersten Datenbanksystem (DE1) eines ersten Kommunikationsnetzes (PLMN), wenn die entsprechenden Teilnehmer sowohl in dem ersten Kommunikationsnetz (PLMN) als auch in einem zweiten Kommunikationsnetz (PISN) als Teilnehmer angemeldet sind, wobei in dem zweiten Kommunikationsnetz (PISN) ein zweites Datenbanksystem zum Speichern von Teilnehmerdatensätzen mit teilnehmerbezogenen Informationen vorgesehen ist, dadurch **gekennzeichnet**, daß im zweiten Kommunikationsnetz (PISN) eine Steuereinrichtung (SE) zum Abfragen der für das erste Datenbanksystem relevanten teilnehmerbezogenen Informationen aus den Teilnehmerdatensätzen des zweiten Datenbanksystems vorgesehen ist, daß eine Steuerung (DS) des ersten Datenbanksystems (DE1) potentiell fehlerhafte teilnehmerbezogenen Informationen im ersten Datenbanksystem (DE1) ermittelt und eine Anforderungsmeldung zum Anfordern der entsprechenden korrekten Informationen an die Steuereinrichtung (SE) des zweiten Kommunikationsnetzes (PISN) übermittelt, daß die Steuereinrichtung (SE) daraufhin die entsprechenden Informationen aus dem zweiten Datenbanksystem abfragt und an die Steuerung (DS) des ersten Datenbanksystems (DE1) übermittelt.

2. Verfahren nach Anspruch 1, dadurch **gekennzeichnet**, daß die Steuerung (DS) des ersten Datenbanksystems (DE1) nur die Informationen bezüglich eines einziges Teilnehmers anfordert.

3. Verfahren nach Anspruch 1, dadurch **gekennzeichnet**, daß die Steuerung (DS) des ersten Datenbanksystems (DE1) die Informationen bezüglich mehrerer Teilnehmer anfordert.

4. Verfahren nach Anspruch 1, dadurch **gekennzeichnet**, daß die Steuerung (DS) des ersten Datenbanksystems (DE1) die Informationen bezüglich aller in beiden Netzen gemeldeten Teilnehmer anfordert.

5. Verfahren nach einem der vorhergehenden Ansprüche, dadurch **gekennzeichnet**, daß das erste Kommunikationsnetz ein Mobilfunknetz (PLMN) ist und das zweite Kommunikationsnetz (PISN) ein Kommunikationsnetz mit mehreren Schnurloskommunikationsanlagen (PINX1, PINX2) ist.

6. Verfahren nach einem der Ansprüche 1 bis 4, dadurch **gekennzeichnet**, daß das erste Kommunikationsnetz ein Mobilfunknetz (PLMN) auf der Grundlage einer ersten Technologie ist und das zweite Kommunikationsnetz ein Mobilfunknetz auf der Grundlage einer zweiten Technologie ist.

7. Verfahren nach einem der Ansprüche 1 bis 5, dadurch **gekennzeichnet**, daß das erste Kommunikationsnetz ein Mobilfunknetz (PLMN) ist und das zweite Kommunikationsnetz (PISN) ein Kommunikationsnetz mit leitungsgebunden angeschlossenen, jeweils einem Teilnehmer zugeordneten Endgeräten ist.

8. Verfahren nach einem der vorhergehenden Ansprüche, dadurch **gekennzeichnet**, daß das zweite Kommunikationsnetz (PISN) mehrere Schnurloskommunikationsanlagen (PINX1, PINX2) enthält, daß einzelnen Teilnehmern drahtlos verbindbare Endgerät (KE) zugeordnet sind, daß jedes drahtlos verbindbare Endgerät (KE), das in dem zweiten Kommunikationsnetz (PISN) als Teilnehmerendgerät angemeldet und betreibbar ist in einer der Schnurloskommunikationsanlagen (PINX1, PINX2) als Teilnehmerendgerät angemeldet und betreibbar ist und in den übrigen Schnurloskommunikationsanlagen (PINX2, PINX1) als Gastendgerät betreibbar ist, daß das zweite Datenbanksystem aus einer Vielzahl von Datenbanken einzelner Schnurloskommunikationsanlagen (PINX2, PINX1) besteht und daß eine einzige Steuereinrichtung (SE) auf eine Anforderung des ersten Datenbanksystems (DE1) die angeforderten Informationen aus den einzelnen Datenbanken des zweiten Datenbanksystems abfragt und an die Steuerung (DS) des ersten Datenbanksystems (DE1) übermittelt.

9. Verfahren nach einem der vorhergehenden Ansprüche, dadurch **gekennzeichnet**, daß die an die Steuerung (DS) des ersten Datenbanksystems (DE1) übermittelten teilnehmerbezogenen Informationen mindestens Informationen über die aktuelle Erreichbarkeit des jeweiligen Teilnehmers einschließen.
